# EUROPÄISCHE PATENTSCHRIFT

(11) **EP 1 884 760 B1**
(45) Veröffentlichungstag und Bekanntmachung des Hinweises auf die Patenterteilung: **22.07.2009**
(21) Anmeldenummer: 07014069.4
(22) Anmeldetag: 18.07.2007
(51) Int. Cl.: G01M 17/02, B60C 25/00

(54) **Radkontrolleinrichtung**
Wheel control device
Dispositif de contrôle des roues

(30) Priorität: 28.07.2006 DE 202006011739 U
(43) Veröffentlichungstag der Anmeldung: 06.02.2008
(73) Patentinhaber: 4 Wheels Service + Logistik GmbH, 40211 Düsseldorf (DE)
(72) Erfinder: Vogl, Heinz, 52074 (DE)
(74) Vertreter: Paul, Dieter-Alfred

(56) Entgegenhaltungen:
- GB-A- 2 327 648
- US-A- 3 790 134
- US-A- 5 460 036

## Beschreibung

Die Erfindung betrifft eine Radkontrolleinrichtung für die Kontrolle von Kraftfahrzeugrädern, bestehend aus Felge und darauf aufgezogenem Reifen, mit einer Radauflage, die eine Rolleinrichtung aufweist, auf der ein stehend aufgesetztes Rad in einer stationären Rollposition in Drehung um seine Rollachse versetzbar ist, wobei die Radauflage wenigstens eine Radstütze für die seitliche Abstützung des Rades in Rollposition aufweist und die Radstütze mit zumindest einem frei drehbaren Stützelement für die seitliche Anlage des Rades versehen ist.

Aus Gründen der Verkehrssicherheit werden heute zu Beginn eines Winters vielfach die Sommerreifen eines Kraftfahrzeuges durch Winterreifen ersetzt und die Winterreifen nach dem Winter gegen Sommerreifen ausgetauscht. Um den Besitzern von Kraftfahrzeugen das Problem der Lagerung des jeweils nicht gebrauchten Radsatzes abzunehmen, bieten viele Reifen- und Autohändler die Einlagerung der Radsätze an. Die Händler wiederum bedienen sich dabei spezieller Serviceunternehmen, die den Händlern die Radsätze abnehmen und in großen Lagerhallen fachgerecht einlagern.

Vor der Einlagerung werden die Räder einer Kontrolle unterzogen und die dabei gewonnenen Daten einer EDV-Einrichtung zugeführt. Hierzu sind spezielle Radkontrolleinrichtungen entwickelt worden (vgl. EP 0 983 878 B1 und WO 94/09688). Diese Radkontrolleinrichtungen haben eine Radauflage, die mit einer Rolleinrichtung versehen ist, auf der ein stehend aufgesetztes Rad in einer stationären Rollposition in Drehung um seine Rollachse versetzbar ist. Die Drehbeweglichkeit lässt eine bequeme Sichtkontrolle von Felge und Reifen sowie eine über den Umfang verteilte Profiltiefenmessung zu. Die dabei erhaltenen Daten werden in eine EDV-Einrichtung eingegeben. Daraus kann eine Liste der eingelagerten Räder mit den erfassten Daten in Form von Radprotokollen entnommen werden. Diese werden beispielsweise über das Internet den angeschlossenen Händlern zur Verfügung gestellt, die dann die Kunden im Bedarfsfall auf den Ersatz von Felgen und/oder Reifen ansprechen können.

Eine weitere, gattungsgemäße Radkontrolleinrichtung ist der GB-A-2,327,648 zu entnehmen. Diese Radkontrolleinrichtung hat eine Rolleinrichtung, bestehend aus zwei Rollen, auf denen ein Rad aufgesetzt werden kann. Zusätzlich ist eine Radstütze für die seitliche Abstützung des Rades in Rollposition vorgesehen. Die Radstütze ist mit einer Stützrolle für die seitliche Anlage des Rades ausgerüstet. Eine im Grundsatz gleiche Radkontrolleinrichtung ist der US-A-5,460,036 zu entnehmen.

Die Kontrolle von Kraftfahrzeugrädern in solchen Radkontrolleinrichtungen ist wegen der Vielzahl der Vorgänge und des zunehmenden Gewichts heutiger Kraftfahrzeugräder mühsam und kraftraubend. Der Erfindung liegt somit die Aufgabe zugrunde, eine Radkontrolleinrichtung der eingangs genannten Art so zu gestalten, dass mit ihr die Kontrolle von Kraftfahrzeugreifen einfacher und kraftsparender erfolgen kann.

Diese Aufgabe wird erfindungsgemäß dadurch gelöst, dass die Radkontrolleinrichtung an einer Seite der Radauflage ein Rahmengestell aufweist, auf dem eine EDV-Einrichtung angeordnet ist. Das Rahmengestell kann als offenes Gestell, aber auch als geschlossenes Gehäuse ausgebildet sein. Zweckmäßigerweise ist die EDV-Einrichtung mit einem Barcodeleser verbunden, um Barcodes einlesen zu können, die zuvor von dem den Radsatz entgegennehmenden Händler angebracht worden sind (vgl. EP 0 983 878 B1).

Des weiteren sollte die EDV-Einrichtung eine Eingabetastatur und einen Monitor aufweisen, um die ermittelten Daten der EDV-Einrichtung zuführen und die Eingabe über den Monitor kontrollieren zu können. Um die Eingabetastatur gut bedienen zu können, sollte sie in etwa bei einer Höhe von 130 bis 200 cm angeordnet sein, vorzugsweise in etwa in Schulterhöhe einer Bedienungsperson durchschnittlicher Größe, d.h. im Bereich von 140 bis 170 cm. Es versteht sich, dass die Eingabetastatur und der Monitor der Radauflage zugewandt ausgerichtet sein sollten, damit die Bedienung der Eingabetastatur und die Kontrolle über den Monitor ohne Änderung der Position der Bedienungsperson bei der Radkontrolle erfolgen kann. Vorzugsweise sollte die Eingabetastatur wenigstens um 45° gegenüber der horizontalen Ebene pultartig schräg gestellt sein. Der Monitor ist zweckmäßigerweise oberhalb der Eingabetastatur angeordnet.

Nach der Erfindung ist ferner vorgesehen, dass die Radkontrolleinrichtung eine Reifenbefülleinrichtung mit Luftdruckanzeigeeinreichung aufweist. Solche Reifenbefülleinrichtungen sind beispielsweise aus der DE 198 37 550 A1 bekannt (vgl. auch EP 0 983 878 B1, Abschnitt 0023). Mit Hilfe der Reifenbefülleinrichtung kann der Reifendruck auf einen bestimmten Wert, beispielsweise 2,5 bar, gebracht werden. Durch Kontrolle am Ende des Einlagerungszeitraums kann dann festgestellt werden, ob ein überdurchschnittlicher Luftverlust vorhanden ist und demgemäß der Reifen einen Schaden aufweist. Die Luftdruckanzeigevorrichtung sollte auf einem Rahmengestell, vorzugsweise dem schon oben erwähnten Rahmengestell, angeordnet sein, das an einer Seite der Radauflage vorgesehen ist, und zwar zweckmäßigerweise neben dem dort vorhandenen Monitor. Die Reifenbefülleinrichtung sollte über eine Schnittstelle mit einer EDV-Einrichtung, vorzugsweise der schon oben erwähnten EDV-Einrichtung, derart verbunden sein, dass der gemessene Luftdruck automatisch an die EDV-Einrichtung weitergebbar ist. Auf diese Weise kann der aktuelle Luftdruck bei Einlagerung gespeichert und einem Radprotokoll zugeordnet werden.

Die Bedienung der Reifenbefülleinrichtung kann in konventioneller Weise durch Betätigung eines dafür vorgesehenen Knopfes oder durch Einstellen eines bestimmten Luftdrukkes erfolgen. Vorzugsweise ist jedoch die Reifenbefülleinrichtung über einen Knieschalter bedienbar, der im Bereich der Radauflage angeordnet ist und es der Bedienungsperson erlaubt, den Schalter durch eine Kniebewegung zu bewegen und damit den Befüllvorgang zu starten.

Nach einem weiteren Merkmal der Erfindung ist vorgesehen, dass die Radkontrolleinrichtung eine Profilmesseinrichtung aufweist, wie sie beispielsweise aus der DE 103 12 231 A1 bekannt ist (vgl. auch EP 0 983 878 B1, Abschnitt 0023). Durch die Drehbarkeit des Rades kann mit Hilfe der Profilmesseinrichtung die Profiltiefe an verschiedenen Stellen über den Umfang verteilt gemessen und festgehalten werden, und zwar vorzugsweise über eine Schnittstelle mit einer EDV-Einrichtung. Auf diese Weise erhält man mit den anderen Messeinrichtungen sowie den Feststellungen durch Sichtkontrolle ein Radprotokoll, das den Kunden, nämlich den Auto- und Reifenhändlern, zur Verfügung gestellt werden kann.

Für die seitliche Abstützung des Rades kann zumindest eine Radstütze vorgesehen sein, die das Rad in Rollposition beidseitig einfassende Stützarme aufweist, die beide mit frei drehbaren Stützelementen für die seitliche Anlage des Rades versehen sind. Alternativ dazu kann vorgesehen sein, dass die Radauflage wenigstens zwei Radstützen aufweist, die beide mit frei drehbaren Stützelementen für die beidseitige Anlage des Rades versehen sind. Statt dessen kann auch vorgesehen sein, dass nur eine Radstütze vorhanden ist und sich auf der dieser Radstütze gegenüber liegenden Seite der Radauflage eine Stützwand befindet.

Für die Ausbildung des jeweiligen Stützelements bieten sich verschiedene Ausführungsformen an. Hierfür kommt beispielsweise eine Kugel oder eine Stützrolle in Frage. Im letzteren Fall ist es zweckmäßig, dass die Radstütze(n) jeweils zwei Stützrollen aufweist bzw. aufweisen, die unabhängig voneinander frei drehbar sind. Zweckmäßigerweise sind sie beidseits einer durch die Rollachse eines in Rollposition befindlichen Rades gehenden Vertikalebene angeordnet, und zwar vorzugsweise so, dass sie bei den üblichen Größen von Kraftfahrzeugrädern an den Reifen zur Anlage kommen. Die jeweils zwei Stützrollen sollten um zwei horizontale Rollenachsen drehbar gelagert sein, und zwar zweckmäßigerweise um ein und dieselbe Rollenachse.

Die Rolleinrichtung weist in an sich bekannter Weise wenigstens zwei horizontal beabstandete, um parallele Horizontalachsen drehbar gelagerte Rollwalzen auf. Statt zwei können auch mehr als zwei Rollwalzen vorgesehen sein.

Um eine allseitige Kontrolle des Rades ohne Änderung der Position der Bedienungsperson zu ermöglichen, sollte die Radauflage um eine Vertikalachse drehbar gelagert sein, und zwar zweckmäßigerweise um zumindest 180°. Dabei kann es hilfreich sein, wenn eine Blockiereinrichtung zur Blockierung der Drehbeweglichkeit der Radauflage vorgesehen ist, um das zu kontrollierende Rad in einer bestimmten winkelposition festsetzen zu können.

Um die Sichtkontrolle und beispielsweise die Vornahme von Profiltiefenmessungen zu erleichtern, ist es vorteilhaft, wenn die Radauflage höhenverstellbar ist. Dies ermöglicht auch die Anpassung an die Größe der jeweiligen Bedienungsperson.

Um die Radkontrolleinrichtung an verschiedenen Orten einsetzen zu können, sollte sie untenseitig auf Rollen stehen, die eine Bewegung der Radkontrolleinrichtung zulassen.

Die Radauflage sollte vorzugsweise von drei senkrecht zueinander stehenden Seiten zugänglich sein. An der vierten Seite kann das schon oben beschriebene Gestell vorhanden sein. Aufgrund dieser Zugänglichkeit kann das Ein- und Ausbringen des zu kontrollierenden Rades und dessen Kontrolle und Behandlung auf einfache Weise geschehen.

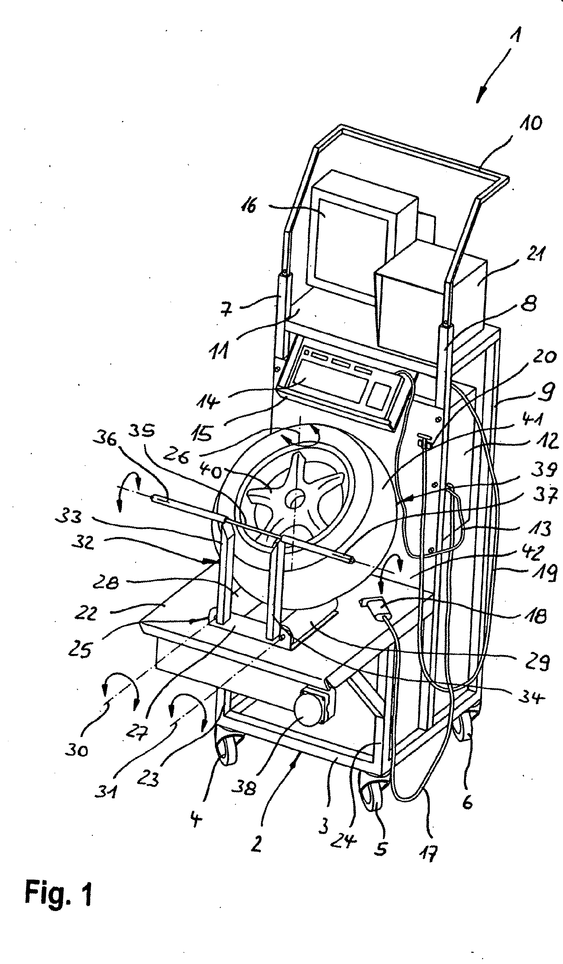

In der Zeichnung ist die Erfindung anhand eines Ausführungsbeispiels näher veranschaulicht. Sie zeigt eine Radkontrolleinrichtung 1 in perspektivischer Ansicht.

Die Radkontrolleinrichtung 1 hat ein Rahmengestell 2, hergestellt aus Vierkantrohren. Das Rahmengestell 2 weist einen rechteckigen Unterrahmen 3 auf, der auf insgesamt vier Rollen 4, 5, 6, ruht, die um horizontale Achsen drehbar gelagert und um ihre Hochachsen verschwenkbar sind. Auf diese Weise kann die Radkontrolleinrichtung in beliebiger Richtung verfahren werden.

Im hinteren Bereich stehen auf dem Unterrahmen 3 vier sich jeweils vertikal erstreckende Gestellsäulen 7, 8, 9. Die beiden vorderen Gestellsäulen 7, 8 sind obenseitig über einen Bügel 10 verbunden, über den die Radkontrolleinrichtung 1 durch entsprechende Handhabung verfahren werden kann. Unterhalb des Bügels 10 befindet sich eine sich horizontal erstreckende Platte 11, die die Gestellsäulen 7, 8, 9 verbindet.

Unterhalb der Platte 11 ist in dem von den Gestellsäulen 7, 8, 9 gebildeten Geviert ein Gehäuse 12 angeordnet. In dem Gehäuse 12 sind eine EDV-Einrichtung, eine Reifenbefülleinrichtung sowie eine Profilmesseinrichtung untergebracht. Die EDV-Einrichtung ist über ein Kabel 13 mit einer Eingabetastatur 14 verbunden, die auf einem schräg gestellten Pult 15 angeordnet ist, welches mit der Vorderkante der Platte 11 verbunden ist. Über ein weiteres, hier nicht sichtbares Kabel ist die EDV-Einrichtung mit einem Monitor 16 gekoppelt, der auf der Platte 11 etwa in Augenhöhe einer durchschnittlich großen Bedienungsperson angeordnet ist. Zusätzlich ist die EDV-Einrichtung über ein Kabel 17 mit einem Barcodescanner 18 verbunden. Mit Hilfe des Barcodescanners 18 können Barcodeaufkleber oder -anhänger an dem jeweils zu kontrollierenden Rad in die EDV-Einrichtung eingegeben werden.

Von der in dem Gehäuse 12 angeordneten Reifenbefülleinrichtung geht ein Luftschlauch 19 aus, der an seinem freien Ende ein in einer Halterung 20 fixiertes Ventil aufweist. Die Reifenbefülleinrichtung ist zusätzlich mit einer Luftdruckanzeigeeinrichtung 21 verbunden, die auf der Platte 11 neben dem Monitor 16 angeordnet ist und vorderseitig mit einem Display zur Anzeige des jeweils gemessenen Luftdruckes versehen ist.

Die Profilmesseinrichtung hat einen hier nicht näher dargestellten Sensor, über den die Profiltiefe eines Rades erfasst werden kann.

Etwa auf Kniehöhe weist die Radkontrolleinrichtung 1 einen Kontrolltisch 22 auf, der untenseitig durch Streben 23, 24 abgestützt wird, die von der Vorderseite des Unterrahmens 3 hochstehen. Auf dem Kontrolltisch 22 ist eine Radauflage 25 angeordnet, die auf dem Kontrolltisch 22 um eine vertikale Achse 26 drehbar gelagert ist. Die Radauflage 25 weist eine Grundplatte 27 auf, an der zwei Rollwalzen 28, 29 frei drehbar gelagert sind, und zwar um parallele und sich horizontal erstreckende Achsen 30, 31. Die Achsen 30, 31 liegen in einer horizontalen Ebene parallel zur Ebene des Kontrolltischs 22.

An der Vorderseite der Grundplatte 27 ist eine Radstütze 32 angeordnet. Sie weist zwei von der Grundplatte 27 vertikal erstreckende Stützstreben 33, 34 auf, die über eine Horizontalstange 35 miteinander verbunden sind. Auf der Horizontalstange 35 sind jeweils beidseitig der Stützstreben 33, 34 Stützrollen 36, 37 frei drehbar gelagert.

Auf der Vorderseite der Radkontrolleinrichtung 1 ist unterhalb des Kontrolltischs 22 ein Knieschalter 38 angeordnet. Der Knieschalter 38 ist mit der Reifenbefülleinrichtung verbunden. Durch Betätigung des Knieschalters 38 mittels des Knies einer Bedienungsperson kann ein Befüllvorgang bewirkt werden.

In der gezeigten Darstellung ruht auf den beiden Rollwalzen 28, 29 ein Rad 39, bestehend aus Felge 40 und Reifen 41. In der gezeigten Stellung wird der Reifen 41 durch eine Stützwandung 42 abgestützt, die sich zwischen den beiden vorderen Gestellsäulen 7, 8 erstreckt und das Rad 39 daran hindert, vollständig in die Waagerechte zu kippen. Für einen Kontrollvorgang wird das Rad 39 in die Vertikale aufgerichtet und auch leicht in Richtung auf die Radstütze 32 gekippt, bis der Reifen 41 an den Stütztrollen 36, 37 zur Anlage kommt. In dieser Rollposition kann das Rad 39 leicht gedreht werden, ohne dass es einer zusätzlichen seitlichen Abstützung durch die Bedienungsperson bedarf. Durch abschnittsweises Verdrehen kann das Rad 39 auf Beschädigungen der Felge 40 und des Reifens 41 überprüft werden. Die dabei gewonnenen Daten können über die Eingabetastatur 14 in die EDV-Einrichtung eingegeben und am Monitor 16 kontrolliert werden. Gleichzeitig kann die Profiltiefenmessung über den Umfang verteilt vorgenommen werden, wobei die gemessenen Daten automatisch an die EDV-Einrichtung weitergegeben werden, d.h. insoweit ist eine Eingabe über die Eingabetastatur 14 nicht notwendig.

Vor oder nach dieser Prozedur wird der aktuelle Luftdruck im Reifen 41 durch Verbindung des Ventils am Luftschlauch 19 mit dem Ventil des Reifens 41 erfasst und ebenfalls automatisch an die EDV-Einrichtung übermittelt. Anschließend wird der Reifen 41 auf einen bestimmten Luftdruck, beispielsweise 2,5 bar gebracht. Nach alledem kann dann das Rad 39 wieder aus der Radkontrolleinrichtung 1 herausgenommen und eingelagert werden.

## Patentansprüche

1. Radkontrolleinrichtung (1) für die Kontrolle von Kraftfahrzeugrädern (39), bestehend aus Felge (40) und darauf aufgezogenem Reifen (41), mit einer Radauflage (25), die eine Rolleinrichtung (28, 29) aufweist, auf der ein stehend aufgesetztes Rad (39) in einer stationären Rollposition in Drehung um seine Rollachse versetzbar ist, wobei die Radauflage (25) wenigstens eine Radstütze (32) für die seitliche Abstützung des Rades (39) in Rollposition aufweist und die Radstütze (32) mit zumindest einem frei drehbaren Stützelement (36, 37) für die seitliche Anlage des Rades (39) versehen ist, **dadurch gekennzeichnet, dass** die Radkontrolleinrichtung (1) an einer Seite der Radauflage (25) ein Rahmengestell (7, 8, 9) aufweist, auf dem eine EDV-Einrichtung angeordnet ist.

2. Radkontrolleinrichtung nach Anspruch 1, **dadurch gekennzeichnet, dass** die EDV-Einrichtung mit einem Barcodeleser (18) verbunden ist.

3. Radkontrolleinrichtung nach Anspruch 1 oder 2, **dadurch gekennzeichnet, dass** die EDV-Einrichtung eine Eingabetastatur (14) und einen Monitor (16) aufweist.

4. Radkontrolleinrichtung nach Anspruch 3, **dadurch gekennzeichnet, dass** die Eingabetastatur (14) in etwa bei einer Höhe von 130 bis 200 cm angeordnet ist.

5. Radkontrolleinrichtung nach Anspruch 3 oder 4, **dadurch gekennzeichnet, dass** Eingabetastatur (14) und Monitor (16) der Radauflage (25) zugewandt ausgerichtet sind.

6. Radkontrolleinrichtung nach einem der Ansprüche 3 bis 5, **dadurch gekennzeichnet, dass** die Eingabetastatur (14) wenigstens um 45° gegenüber der horizontalen Ebene schräg gestellt ist.

7. Radkontrolleinrichtung nach einem der Ansprüche 3 bis 6, **dadurch gekennzeichnet, dass** der Monitor (16) oberhalb der Eingabetastatur (14) angeordnet ist.

8. Radkontrolleinrichtung nach einem der Ansprüche 1 bis 7, **dadurch gekennzeichnet, dass** die Radkontrolleinrichtung (1) eine Reifenbefülleinrichtung mit Luftdruckanzeigeeinrichtung (21) aufweist.

9. Radkontrolleinrichtung nach Amnspruch 8, **dadurch gekennzeichnet, dass** die Luftdruckanzeigeeinrichtung (21) auf dem Rahmengestell (7, 8, 9) angeordnet ist.

10. Radkontrolleinrichtung nach wenigstens den Ansprüchen 3 und 8, **dadurch gekennzeichnet, dass** die Luftdruckanzeigeeinrichtung (21) neben dem Monitor (16) angeordnet ist.

11. Radkontrolleinrichtung nach einem der Ansprüche 8 bis 10, **dadurch gekennzeichnet, dass** die Reifenbefülleinrichtung über eine Schnittstelle mit der EDV-Einrichtung derart verbunden ist, dass der gemessene Luftdruck automatisch an die EDV-Einrichtung weitergebbar ist.

12. Radkontrolleinrichtung nach einem der Ansprüche 8 bis 11, **dadurch gekennzeichnet, dass** die Reifenbefülleinrichtung über einen Knieschalter (38) bedienbar ist.

13. Radkontrolleinrichtung nach Anspruch 12, **dadurch gekennzeichnet, dass** der Knieschalter (38) im Bereich der Radauflage (25) angeordnet ist.

14. Radkontrolleinrichtung nach einem der Ansprüche 1 bis 13, **dadurch gekennzeichnet, dass** die Radkontrolleinrichtung (1) eine Profilmesseinrichtung aufweist.

15. Radkontrolleinrichtung nach Anspruch 14, **dadurch gekennzeichnet, dass** die Profiltiefenmesseinrichtung über eine Schnittstelle mit der EDV-Einrichtung derart verbunden ist, dass die gemessene Profiltiefe automatisch an die EDV-Einrichtung übergebbar ist.

16. Radkontrolleinrichtung nach einem der Ansprüche 1 bis 15, **dadurch gekennzeichnet, dass** die zumindest eine Radstütze das Rad in Rollposition beidseitig einfassende Stützarme aufweist, die beide mit frei drehbaren Stützelementen für die seitliche Anlage des Rades versehen sind.

17. Radkontrolleinrichtung nach einem der Ansprüche 1 bis 15, **dadurch gekennzeichnet, dass** die Radauflage wenigstens zwei Radstützen aufweist, die beide mit frei drehbaren Stützelementen für die seitliche Anlage des Rades versehen sind.

18. Radkontrolleinrichtung nach einem der Ansprüche 1 bis 17, **dadurch gekennzeichnet, dass** sich auf der der Radstütze (32) gegenüber liegenden Seite der Radauflage (25) eine Stützwand (42) befindet.

19. Radkontrolleinrichtung nach einem der Ansprüche 1 bis 4 bis 18, **dadurch gekennzeichnet, dass** das bzw. die Stützelement(e) als Stützrolle(n) (36, 37) ausgebildet ist bzw. sind.

20. Radkontrolleinrichtung nach Anspruch 19, **dadurch gekennzeichnet, dass** die Radstütze(n) (32) jeweils zwei Stützrollen (36, 37) aufweist bzw. aufweisen, die unabhängig voneinander frei drehbar sind.

21. Radkontrolleinrichtung nach Anspruch 20, **dadurch gekennzeichnet, dass** die jeweils zwei Stützrollen (36, 37) beidseits einer durch die Rollachse eines in Rollposition befindlichen Rades (39) gehenden Vertikalebene angeordnet sind.

22. Radkontrolleinrichtung nach Anspruch 21, **dadurch gekennzeichnet, dass** die jeweils zwei Stützrollen (36, 37) um zwei horizontale Rollenachsen drehbar gelagert sind.

23. Radkontrolleinrichtung nach Anspruch 22, **dadurch gekennzeichnet, dass** die jeweils zwei Stützrollen (36, 37) um dieselbe Rollenachse drehbar gelagert sind.

24. Radkontrolleinrichtung nach einem der Ansprüche 1 bis 23, **dadurch gekennzeichnet, dass** die Rolleinrichtung wenigstens zwei horizontal beabstandete, um parallele Horizontalachsen drehbar gelagerte Rollwalzen (28, 29) aufweist.

25. Radkontrolleinrichtung nach einem der Ansprüche 1 bis 24, **dadurch gekennzeichnet, dass** die Radauflage (25) um eine Vertikalachse drehbar gelagert ist.

26. Radkontrolleinrichtung nach einem der Ansprüche 1 bis 25, **dadurch gekennzeichnet, dass** die Radauflage (25) um zumindest 180° drehbar gelagert ist.

27. Radkontrolleinrichtung nach Anspruch 25 oder 25, **dadurch gekennzeichnet, dass** eine Blockiereinrichtung zur Blockierung der Drehbeweglichkeit der Radauflage (25) vorgesehen ist.

28. Radkontrolleinrichtung nach einem der Ansprüche 1 bis 27, **dadurch gekennzeichnet, dass** die Radauflage (25) höhenverstellbar ist.

29. Radkontrolleinrichtung nach einem der Ansprüche 1 bis 28**, dadurch gekennzeichnet, dass** die Radkontrolleinrichtung (1) untenseitig auf Rollen (4, 5, 6) steht.

30. Radkontrolleinrichtung nach einem der Ansprüche 1 bis 29, **dadurch gekennzeichnet, dass** die Radauflage (25) von drei senkrecht zueinander stehenden Seiten zugänglich ist.

## Claims

1. Wheel inspection device (1) for controlling the wheels (39) of vehicles, comprising a wheel rim (40) and a tyre (41) with a wheel rest (25) that has a rolling device (28, 29) on which a standing wheel (39) can be rotated, around its rolling axis, in a stationary rolling position, whereby the wheel rest (25) has at least one wheel support (32) for lateral support for the wheel (39) in the rolling position and the wheel supports (32) have at least one support element (36, 37), which can rotate freely, for lateral support of the wheel (39), **characterized in that** the wheel inspection device (1) has a frame (7, 8, 9), on one side of the wheel rest (25), on which an EDP device is disposed.

2. Wheel inspection device in accordance with claim 1, **characterized in that** the EDP device is connected to a barcode reader (18).

3. Wheel inspection device in accordance with claims 1 or 2, **characterized in that** the EDP device has an input keyboard (14) and a monitor (16).

4. Wheel inspection device in accordance with claim 3, **characterized in that** the input keyboard (14) is disposed at a height of 130 to 200 cm.

5. Wheel inspection device in accordance with claims 3 or 4, **characterized in that** the input keyboard (14) and monitor (16) are aligned facing the wheel rest (25).

6. Wheel inspection device in accordance with one of claims 3 to 5, **characterized in that** the input keyboard (14) is inclined by at least 45° in relation to the horizontal plane.

7. Wheel inspection device in accordance with one of claims 3 to 6, **characterized in that** the monitor (16) is disposed above the input keyboard (14).

8. Wheel inspection device in accordance with one of claims 1 to 7**, characterized in that** the wheel inspection device (1) has a tyre inflation device with an air-pressure indicator (21).

9. Wheel inspection device in accordance with claim 8, **characterized in that** the air-pressure indicator (21) is disposed on the frame (7, 8, 9).

10. Wheel inspection device in accordance with at least claims 3 and 8, **characterized in that** the air-pressure indicator (21) is disposed next to the monitor (16).

11. Wheel inspection device in accordance with one of claims 8 to 10, **characterized in that** the tyre inflation device is connected to the EDP device by means of an interface such that the measured air-pressure can automatically be passed onto the EDP device.

12. Wheel inspection device in accordance with one of claims 8 to 11, **characterized in that** the tyre inflation device can be operated by means of a knee switch (38).

13. Wheel inspection device in accordance with claim 12, **characterized in that** the knee switch (38) is disposed in the area of the wheel rest (25).

14. Wheel inspection device in accordance with one of claims 1 to 13, **characterized in that that** the wheel inspection device (1) has a tread measuring instrument.

15. Wheel inspection device in accordance with claim 14, **characterized in that** the tread measuring instrument is connected to the EDP device by means of an interface such that the measured tread depth is automatically supplied to the EDP device.

16. Wheel inspection device in accordance with one of claims 1 to 15, **characterized in that** the at least one wheel rest has support arms on both sides which enclose the wheel in the rolling position, both support arms having freely rotatable support elements for the wheel to lie on laterally.

17. Wheel inspection device in accordance with one of claims 1 to 15, **characterized in that** the wheel rest has at least two wheel supports, both of which have support elements that can rotate freely, for supporting the wheel laterally.

18. Wheel inspection device in accordance with one of claims 1 to 17, **characterized in that** there is a rest surface (42) on the side, of the wheel rest (25), that lies opposite the wheel rest (25).

19. Wheel inspection device in accordance with one of claims 1 to 4 to 18, **characterized in that** the support element(s) is/are in the form of a support roller or support rollers (36, 37).

20. Wheel inspection device in accordance with claim 19, **characterized in that** the wheel support or supports (32) in each case has or have two support rollers (36, 37) that can rotate freely, independently of each other.

21. Wheel inspection device in accordance with claim 20, **characterized in that** two support rollers (36, 37) that there are in each case disposed on both sides of a vertical plane passing through the rolling axis of a wheel (39) located in the rolling position.

22. Wheel inspection device in accordance with claim 21, **characterized in that** the two support rollers (36, 37) that there are in each case are supported such that they can rotate around two horizontal rolling axes.

23. Wheel inspection device in accordance with claim 22, **characterized in that** the two support rollers (36, 37) that there are in each case are supported such that they can rotate around the same rolling axis.

24. Wheel inspection device in accordance with one of claims 1 to 23, **characterized in that** the roller arrangement has at least two horizontally separated rollers (28, 29) supported such that they can rotate around parallel, horizontal axes.

25. Wheel inspection device in accordance with one of claims 1 to 24, **characterized in that** the wheel rest (25) is supported such that it can rotate around a vertical axis.

26. Wheel inspection device in accordance with one of claims 1 to 25, **characterized in that** the wheel rest (25) is supported such that it can rotate through at least 180°.

27. Wheel inspection device in accordance with claim 25, **characterized in that** there is a locking device to block the wheel rest's capacity to rotate (25).

28. Wheel inspection device in accordance with one of claims 1 to 27, **characterized in that** the height of the wheel rest (25) can be adjusted.

29. Wheel inspection device in accordance with one of claims 1 to 28, **characterized in that** the wheel inspection device (1) stands, on its lower side, on rollers (4, 5, 6).

30. Wheel inspection device in accordance with one of claims 1 to 29, **characterized in that** the wheel rest (25) can be accessed from three sides that standing perpendicular in relation to each other.

## Revendications

1. Dispositif (1) de contrôle de roues pour le contrôle de roues (39) de véhicule automobile constituées d'une jante (40) sur laquelle est monté un pneumatique (41), avec un support de roue (25) qui présente un équipement de roulement (28, 29) sur lequel une roue (39) placée verticalement dans une position de roulement stationnaire peut être mise en rotation autour de son axe de roulement, sachant que le support de roue (25) présente au moins un soutien de roue (32) pour le soutien latéral de la roue (39) dans la position de roulement, et que le soutien de roue (32) est pourvu d'au moins un élément de soutien (36, 37) librement rotatif pour l'application latérale de la roue (39), **caractérisé en ce que** le dispositif (1) de contrôle de roues présente, sur un côté du support de roue (25), un bâti (7, 8, 9) sur lequel est disposé un équipement informatique.

2. Dispositif de contrôle de roues selon la revendication 1, **caractérisé en ce que** l'équipement informatique est relié à un lecteur de codes barre (18).

3. Dispositif de contrôle de roues selon la revendication 1 ou 2, **caractérisé en ce que** l'équipement informatique présente un clavier de saisie (14) et un écran (16).

4. Dispositif de contrôle de roues selon la revendication 3, **caractérisé en ce que** le clavier de saisie (14) est disposé environ à une hauteur de 130 à 200 cm.

5. Dispositif de contrôle de roues selon la revendication 3 ou 4, **caractérisé en ce que** le clavier de saisie (14) et l'écran (16) sont tournés vers le support de roue (25).

6. Dispositif de contrôle de roues selon l'une des revendications 3 à 5, **caractérisé en ce que** le clavier de saisie (14) est disposé en oblique au moins à 45° par rapport au plan horizontal.

7. Dispositif de contrôle de roues selon l'une des revendications 3 à 6, **caractérisé en ce que** l'écran (16) est disposé au-dessus du clavier de saisie (14).

8. Dispositif de contrôle de roues selon l'une des revendications 1 à 7, **caractérisé en ce que** le dispositif (1) de contrôle de roues présente un équipement de gonflage de pneumatiques avec un équipement (21) d'affichage de la pression d'air.

9. Dispositif de contrôle de roues selon la revendication 8, **caractérisé en ce que** l'équipement (21) d'affichage de la pression d'air est disposé sur le bâti (7, 8, 9).

10. Dispositif de contrôle de roues selon au moins les revendications 3 et 8, **caractérisé en ce que** l'équipement (21) d'affichage de la pression d'air est disposé à côté de l'écran (16).

11. Dispositif de contrôle de roues selon l'une des revendications 8 à 10,
**caractérisé en ce que** l'équipement de gonflage de pneumatiques est relié par l'intermédiaire d'une interface à l'équipement informatique de telle sorte que la pression d'air mesurée peut être automatiquement transmise à l'équipement informatique.

12. Dispositif de contrôle de roues selon l'une des revendications 8 à 11, **caractérisé en ce que** l'équipement de gonflage de pneumatiques peut être actionné au moyen d'un interrupteur (38) commandé par le genou.

13. Dispositif de contrôle de roues selon la revendication 12, **caractérisé en ce que** l'interrupteur (38) commandé par le genou est disposé dans la région du support de roue (25).

14. Dispositif de contrôle de roues selon l'une des revendications 1 à 13, **caractérisé en ce que** le dispositif (1) de contrôle de roues présente un équipement de mesure de profondeur de sculpture (« profondimètre »).

15. Dispositif de contrôle de roues selon la revendication 14, **caractérisé en ce que** le profondimètre est relié par l'intermédiaire d'une interface à l'équipement informatique de telle sorte que la profondeur de sculpture mesurée peut être automatiquement transmise à l'équipement informatique.

16. Dispositif de contrôle de roues selon l'une des revendications 1 à 15, **caractérisé en ce que** le soutien de roue au moins unique présente des bras de soutien qui entourent de part et d'autre la roue en position de roulement, bras qui sont tous deux pourvus d'éléments de soutien librement rotatifs pour l'application latérale de la roue.

17. Dispositif de contrôle de roues selon l'une des revendications 1 à 15, **caractérisé en ce que** le support de roue présente au moins deux soutiens de roue, qui sont tous deux pourvus d'éléments de soutien librement rotatifs pour l'application latérale de la roue.

18. Dispositif de contrôle de roues selon l'une des revendications 1 à 17, **caractérisé en ce qu'**une paroi de soutien (42) se trouve sur le côté du support de roue (25) qui est opposé au soutien de roue (32).

19. Dispositif de contrôle de roues selon l'une des revendications 1 à 4 à 18, **caractérisé en ce que** le ou les éléments de soutien est ou sont réalisé(s) sous la forme de rouleau(x) de soutien (36, 47).

20. Dispositif de contrôle de roues selon la revendication 19, **caractérisé en ce que** le ou les soutien(s) de roue (32) présente(-nt) respectivement deux rouleaux de soutien (36, 37) qui sont librement rotatifs indépendamment entre eux.

21. Dispositif de contrôle de roues selon la revendication 20, **caractérisé en ce que** les deux rouleaux de soutien respectifs (36, 37) sont disposés de part et d'autre d'un plan vertical passant par l'axe de roulement d'une roue (39) se trouvant en position de roulement.

22. Dispositif de contrôle de roues selon la revendication 21, **caractérisé en ce que** les deux rouleaux de soutien respectifs (36, 37) sont montés à rotation autour de deux axes de rouleaux horizontaux.

23. Dispositif de contrôle de roues selon la revendication 22, **caractérisé en ce que** les deux rouleaux de soutien respectifs (36, 37) sont montés à rotation autour du même axe de rouleau.

24. Dispositif de contrôle de roues selon l'une des revendications 1 à 23, **caractérisé en ce que** l'équipement de roulement présente au moins deux cylindres de roulement (28, 29) horizontalement distants entre eux, montés à rotation autour d'axes horizontaux parallèles.

25. Dispositif de contrôle de roues selon l'une des revendications 1 à 24, **caractérisé en ce que** le support de roue (25) est monté à rotation autour d'un axe vertical.

26. Dispositif de contrôle de roues selon l'une des revendications 1 à 25, **caractérisé en ce que** le support de roue (25) est monté à rotation d'au moins 180°.

27. Dispositif de contrôle de roues selon la revendication 25 ou 26, **caractérisé en ce qu'**un équipement de blocage est prévu pour bloquer la faculté de rotation du support de roue (25).

28. Dispositif de contrôle de roues selon l'une des revendications 1 à 27, **caractérisé en ce que** le support de roue (25) est réglable en hauteur.

29. Dispositif de contrôle de roues selon l'une des revendications 1 à 28, **caractérisé en ce que** le dispositif (1) de contrôle de roues repose sur le dessous sur des roulettes (4, 5, 6).

30. Dispositif de contrôle de roues selon l'une des revendications 1 à 29, **caractérisé en ce que** le support de roue (25) est accessible par trois côtés mutuellement perpendiculaires.
